(19) Europäisches Patentamt
European Patent Office
Office européen des brevets

(11) Publication number: 0 380 313 A2

(12) # EUROPEAN PATENT APPLICATION

(21) Application number: 90300722.7

(22) Date of filing: 23.01.90

(51) Int. Cl.5: G01N 27/26

(30) Priority: 23.01.89 US 299868

(43) Date of publication of application: 01.08.90 Bulletin 90/31

(84) Designated Contracting States: DE FR GB IT SE

(71) Applicant: EASTMAN KODAK COMPANY
343 State Street
Rochester, New York 14650(US)

(72) Inventor: Adcock, Mark William, c/o EASTMAN KODAK COMPANY
Patent Department 343 State Street
Rochester New York 14650(US)

(74) Representative: Baron, Paul Alexander Clifford et al
Kodak Limited Patent Department Headstone Drive
Harrow Middlesex HA1 4TY(GB)

(54) **Field inversion electroblotting and electroelution.**

(57) Disclosed herein are apparatus and method for electroblotting or electroelution, wherein a field is inverted repeatedly over time, until an electrophoretically separated DNA, RNA or protein is forced out of the gel (G) and to an appropriate receiver (M) by the net field so produced.

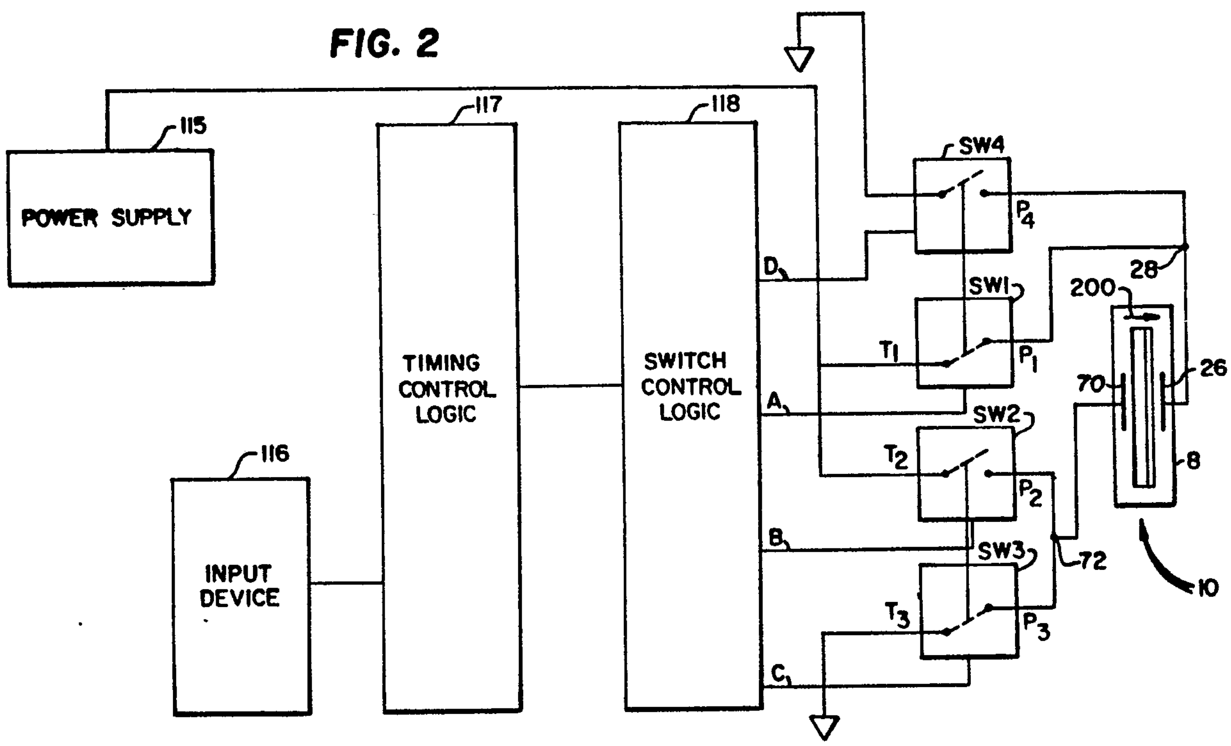


FIG. 2

EP 0 380 313 A2

# FIELD INVERSION ELECTROBLOTTING & ELECTROELUTION

This invention pertains to apparatus for the transfer of DNA, RNA or protein via an electric field to a membrane or salt trap.

US Patent Specification US-A-4622124 describes a horizontal electroblotter used to transfer electrophoretically resolved DNA, RNA or protein from a gel to a receiver such as a membrane. The membrane is a more suitable recording medium to preserve the results of the separation. In this electroblotting process, the gel and membrane are placed in contact in a buffer, between a pair of electrodes, and a direct current is imposed by charging the electrodes with voltages +V and -V. The sign of the charge for each electrode is selected so that the sign on the electrode adjacent to the gel is the same as the net sign of the DNA, RNA or protein to be transferred. In this fashion, the charged DNA, RNA or protein is forced to transfer to the membrane. No attempt is made to reverse the charge on the electrodes.

This process works quite well, as long as the molecular weight of the DNA, RNA or protein is not too large. However, for molecular weights larger than about 2 x $10^4$ base pairs, the direct field approach is not adequate to dislodge the high molecular weight material from the gel, at least not in reasonable lengths of time (less than one day).

In addition to transfer via electroblotting, a related transfer process is electroelution, in which there is no need to maintain the DNA, RNA or protein in a specified record of separation. Instead, the DNA, for example, has already been identified, and is needed to be extracted so that it can be purified or cloned. In such cases, it is transferred from the gel to a receiver such as a dialysis cup membrane or a salt trap. US Patent Specification US-A-4576702 discloses one arrangement in which both the receiver and the gel are placed in a buffer bath so that they are between two electrodes, and a direct current is imposed by charging the two electrodes substantially as described above for electroblotting. Again, such electroelution processes work efficiently only if the molecular weights to be transferred are less than about 2 x $10^4$ base pairs.

Chemical elutions have also been tried, in which the gel is melted and the DNA, RNA or protein is extracted by an aqueous phase-oil phase separation This has proven unsatisfactory, however, as mixing an essential step in that process and the mixing produces shear stresses which shear the DNA, RNA or protein unacceptably.

Therefore, a problem has existed prior to this invention, of providing an electroblotting and/or electroelution process, and apparatus therefore, that can effectively transfer the larger molecular weight DNA, RNA or protein to a suitable receiver.

It has been found that such larger molecular weight materials can be moved within the gel for purpose of electrophoretic separation, by altering the fields imposed upon the pair of electrodes, so that the field changes direction. Examples of such processes are described in US Patent Specifications US-A-4740283 and US-A-4737251. However, neither of these patent specifications suggests the use of field changes as a means of bringing about transfer out of the gel. More specifically, in US-A-4740283, direct current flow in only one direction is used when it is desired to transfer by electroblot, just as has always been the case in electroblotting, even though the rest of the specification deals with fields which alternate in direction for moving the large molecules through the gel.

It is an object of this invention to provide a process which is used to electrophoretically separate large molecules of DNA, RNA and protein within a gel, which is effective in electrotransferring such material from the gel to another receiver, and overcomes the problems mentioned above.

More specifically, in accordance with one aspect of the present invention, there is provided a method of transferring separated nucleic acids or proteins from an electrophoresis gel to a receiver which comprises the steps of placing a gel with already-separated nucleic acids or proteins in contact with a receiver to which the acids or proteins are to be transferred, and positioning the contacted gel and receiver between two oppositely disposed electrodes; characterized by the further steps of :-

a) applying a charge +V1 to one of the two electrodes and a charge -V1 to the other electrode of the two electrodes for a time T1, the electrode closest to the gel having the voltage with the same sign as the net charge on the nucleic acid or the protein;

b) applying a charge of -V2 and +V2 to the one electrode and to the other electrode respectively for a time T2, $|V1|$, $|V2|$, T1 and T2, being selected in magnitude to assure a net migration of the separated nucleic acid or protein from the gel to the receiver; and

c) repeating steps a) and b) until the transfer is complete.

(The symbols $| \; |$ mean the absolute value of the variable.) This method is useful both in electroblotting and electroelution.

In accordance with another aspect of the present invention, there is provided transfer apparatus for electrically transferring separated nucleic acids or proteins from an electrophoresis gel to a receiver, the apparatus comprising holding means for holding a gel on which the acids or proteins have been separated, a receiver for the acid or protein, a pair of electrodes disposed with the gel and the receiver positioned between the electrodes, and a voltage source for biasing either of the electrodes for a predetermined time with a predetermined voltage V1 or V2, the other of the electrodes being simultaneously charged with a -V1 or -V2, respectively; characterized by switching means for alternately and repeatedly switching the voltage source between the electrodes and for selecting the voltage from the value V1 or V2, and by control means for controlling the switching means in accordance with a preselected pattern.

It is an advantageous feature of the invention that electroblotting or electroelution can be carried out even with DNA, RNA or protein larger in molecular weight than 2 x $10^4$ base pairs.

It is another advantageous feature of the invention that some of the equipment used to cause electrophoretic separation of the substances in the gel is also useful in the transfer of the separated substances to another receiver.

For a better understanding of the present invention, reference will now be made, by way of example only, with reference to the accompanying drawings in which:-

Figure 1 is a partially exploded view in perspective of an electroblotting apparatus according to the present invention; and

Figure 2 is a simplified block diagram of electrical controls useful in electrotransfer apparatus which provides switching of fields.

Electroblotting and electroelution apparatus for blotting and the elution respectively, molecular weight DNA, RNA or protein, which have previously been thought incapable of transfer using electrotransfer techniques are described. The preferred apparatus is described in terms of the electroblotting apparatus of US Patent Specification US-A-4622124 or the electroeluting apparatus of US Patent Specification US-A-4576702. In addition, the invention is useful with other apparatus capable of electrotransferring DNA, RNA, or protein from electrophoresis medium to a membrane.

A preferred known electroblotting apparatus is described in US-A-4622124. A similar arrangement is also shown in Figure 1. The apparatus comprises a holding tank 8 for receiving a gel G and a membrane M placed in contact with the gel G, and a buffer liquid. The tank 8 comprises opposing sidewalls 14, 18 and 16, 20, a bottom wall 24, and a top wall or cover 12 hinged to a rail 32 by means of hinges 34. Bottom wall 24 has an electrode 26 coiled thereon, which is connected to an electrical connector 28. The electrode on the opposite side of the gel-membrane combination G-M is electrode 70, which is mounted on a screen or plate 66. This electrode 70 is connected to a connector 72. A baffle 76 is positioned between the gel-membrane combination G-M to direct bubbles to the side to prohibit their accumulation on the supports for the gel-membrane combination G-M. Support 44 clamps to support 42 with the combination G-M sandwiched between the two supports.

A useful buffer for this electroblotter is as follows:

TAE Formulation

0.04 Molar Tris-acetate [Tris(hydroxymethyl)-aminomethane acetate]
0.001 Molar EDTA [ethylenediamene-tetraacetic acid]
balance, water
pH = 8.0 approximately

The rest of the apparatus, and its use, are described in US-A-4622124.

Alternatively, in some electroblotters the gel and membrane are held together by the electrodes themselves (not shown), and the buffer tank is omitted. This is possible because enough buffer remains in the gel to provide the needed buffer for the electrotransfer process.

Unlike the apparatus shown in US-A-4622124, the control circuitry by which the field direction alteration is to be applied to the electroblotting or electroelution, is that which provides field inversion. The circuitry described in US-A-4737251, which teaches field inversion applied only to the electrophoresis, can be used, or the circuitry can be that described in US-A-4740283. Apparatus in commercial use embodying such circuitry can be obtained under the trademark "DNA Star Pulse" sold by DNA Star, or the trademark "Geneline System" manufactured by Beckman Instruments, respectively. There is a significant difference, however - the power source providing the voltage and current of the field is not that used for the electrophoresis.

More specifically, useful circuitry is schematically shown in Figure 2. This illustrates a suitable power supply 115 connected to one side of two solid state switching elements of SW1 and SW2 at points T1 and T2. If electroblotting is to be performed, the power supply preferably produces 140V at a current of between 0.5 and 2.5A. If electroelution is desired, the power supply is selected to produce, for example, between 100 and 150V at a current of between 20 and 30mA. The electroblotter of Figure 1 is schematically shown as device 10 in Figure 2. Electrode 26 and its connector 28 are wired to switches SW1 and SW4, which act as a double pole, double throw switch. SW1 connects electrode 26 to voltage supply 115, or when the switch is thrown, SW4 connects it to ground.

Similarly, electrode 70 and its connector 72 are wired to switches SW2 and SW3, which also act as a double pole, double throw switch and are controlled to act simultaneously when SW1 and SW4 are switched. Thus, when as shown electrode 26 is connected via switch SW1 to power supply 115 to provide a voltage of +V, switch SW3 and electrode 70 are connected to ground. When all the switches are switched simultaneously, SW2 then connects electrode 70 to power supply 115 while switch SW1 and SW3 open and switch SW4 connects electrode 26 to ground. Switch control logic 118 serves to actuate the switches SW1, SW2, SW3 and SW4. This control logic is driven by timing control logic 117, which may consist of a commercially available sequence timer or programmable controller capable of producing logic level signals. A conventional input device 116 permits reprogramming of the timing control logic 117 by the user.

The rest of the circuitry can be constructed in accordance with conventional techniques. Such circuitry can include conventional ramping means whereby the voltage +V or -V at any one time can be gradually changed (e.g., increased) before the polarity is reversed, or the value +V or -V can be varied each time it is applied in the "forward" or "reverse" direction.

The switch control logic must be operated to provide a net conductive force in the direction of arrow 200 in Figure 2. This is done by applying +V for a longer time to the one of electrodes 26, 70 which is most likely to pull the DNA, RNA or protein away from the gel. Since most DNA and RNA have a net negative charge this means that +V from power supply 115 needs to be applied to electrode 26 longer than it is applied to electrode 70. For example, the voltage can be applied to electrode 26 for 120s, and then to electrode 70 for only 40s.

The method of transfer, sometimes called "field inversion", will be readily apparent from the preceding description. The net migration to the receiver can be achieved by having a positive voltage V1 on electrode 70 which is equal in magnitude to the negative voltage V1 previously applied to it, but for a shorter time than that for which the negative voltage was applied. Alternatively, a negative voltage V2 can be applied which is less in magnitude than the positive voltage V1, the negative voltage V2 being applied for a time T2 which is equal to or less than the time T1 for which the positive voltage is applied to electrode 70. As a further alternative, the negative voltage V2 applied to electrode 70 can be chosen to be so much less, in magnitude, than the positive voltage V1, that the time for which -V2 is applied, T2, is greater than the time for which +V1 is applied, T1, since the magnitude differential of (V2-V1) still insures a net migration to the receiver. More particularly, in a preferred embodiment the transfer occurs by placing the gel along with the membrane as the appropriate receiver, in the tank 8 along with buffer; positioning the two electrodes on opposite sides of the gel-buffer-membrane combination G-M; applying a voltage +V1 to electrode 26, while a voltage -V1 is placed applied to electrode 70, for time T1 (e.g. 120s) in the case of negatively charged DNA or RNA; then for a time T2 which is less than T1, switching the charges so that electrode 70 has the voltage +V1 while electrode 26 has voltage -V1; and repeating the process until transfer is complete. Or alternatively, as described in US-A-4737251, the same result can be achieved by applying a voltage +V2 to electrode 70, for an equal length of time T1, wherein the absolute value of V2 (hereinafter, |V2|) is less than the absolute value of V1, |V1|. In such a case, a second voltage supply of lesser voltage is used, with switch SW2 and line T2 being connected to it rather than to power supply 115.

In still another embodiment, the appropriate receiver for the transfer is a salt trap and the apparatus is electroelution apparatus, exactly as is described in US-A-4576702. In such an apparatus, the gel and the receiver are not in contact like the gel and membrane of the electroblotter. The power supply and control of the switching is otherwise exactly as described for electroblotting albeit with a power supply providing a different level of voltage and current as noted above, so that the electroeluter disclosed in US-A-4576702, can be substituted for the electroblotter apparatus 10 of Figure 2.

## Claims

1. A method of transferring separated nucleic acids or proteins from an electrophoresis gel to a receiver which comprises the steps of placing a gel with already-separated nucleic acids or proteins in contact with a receiver to which the acids or proteins are to be transferred, and positioning the contacted gel and receiver between two oppositely disposed electrodes; characterized by the further steps of :-

a) applying a charge +V1 to one of the two electrodes and a charge -V1 to the other electrode of the two electrodes for a time T1, the electrode closest to the gel having the voltage with the same sign as the net charge on the nucleic acid or the protein;

b) applying a charge of -V2 and +V2 to the one electrode and to the other electrode respectively for a time T2, |V1|, |V2|, T1 and T2, being selected in magnitude to assure a net migration of the separated nucleic acid or protein from the gel to the receiver; and

c) repeating steps a) and b) until the transfer is complete.

2. A method according to claim 1, wherein step b) comprises using a positive voltage on the electrode farthest from the gel which is equal to or greater in magnitude than the negative voltage applied to the farthest electrode for a given application time, the magnitude of the the positive voltage being equal to that of the negative voltage only if the time of application of the negative voltage is less than that of the positive voltage.

3. A method according to claim 1 or 2, wherein the receiver is placed in a buffer.

4. A method according to claim 1 or 2, wherein the receiver is a salt trap and wherein the method is electroelution transfer.

5. A method according to claim 1 or 2, wherein the receiver is a membrane and the method is electroblotting transfer.

6. Transfer apparatus for electrically transferring separated nucleic acids or proteins from an electrophoresis gel (G) to a receiver (M), the apparatus comprising holding means (42, 44) for holding a gel (G) on which the acids or proteins have been separated, a receiver (M) for the acid or protein, a pair of electrodes (26, 70) disposed with the gel (G) and the receiver (M) positioned between the electrodes (26, 70), and a voltage source (115) for biasing either of the electrodes (26, 70) for a predetermined time with a predetermined voltage V1 or V2, the other of the electrodes (70, 26) being simultaneously charged with a -V1 or -V2, respectively; characterized by switching means (SW1, SW2, SW3, SW4) for alternately and repeatedly switching the voltage source (115) between the electrodes (26, 70) and for selecting the voltage from the value V1 or V2, and by control means (117, 118) for controlling the switching means (SW1, SW2, SW3, SW4) in accordance with a preselected pattern.

7. Apparatus according to claim 6, wherein the holding means (42, 44) holds the gel (G) and the receiver (M) in contact to provide electroblotting.

8. Apparatus according to claim 6, and further including in the holding means a tank (8) suitable for holding a buffer liquid.

9. Apparatus according to claim 6, wherein the receiver (M) is a salt trap and the transfer apparatus is electroelution apparatus.

10. Apparatus according to claim 6, wherein the receiver (M) is a membrane and the transfer apparatus is electroblotting apparatus.

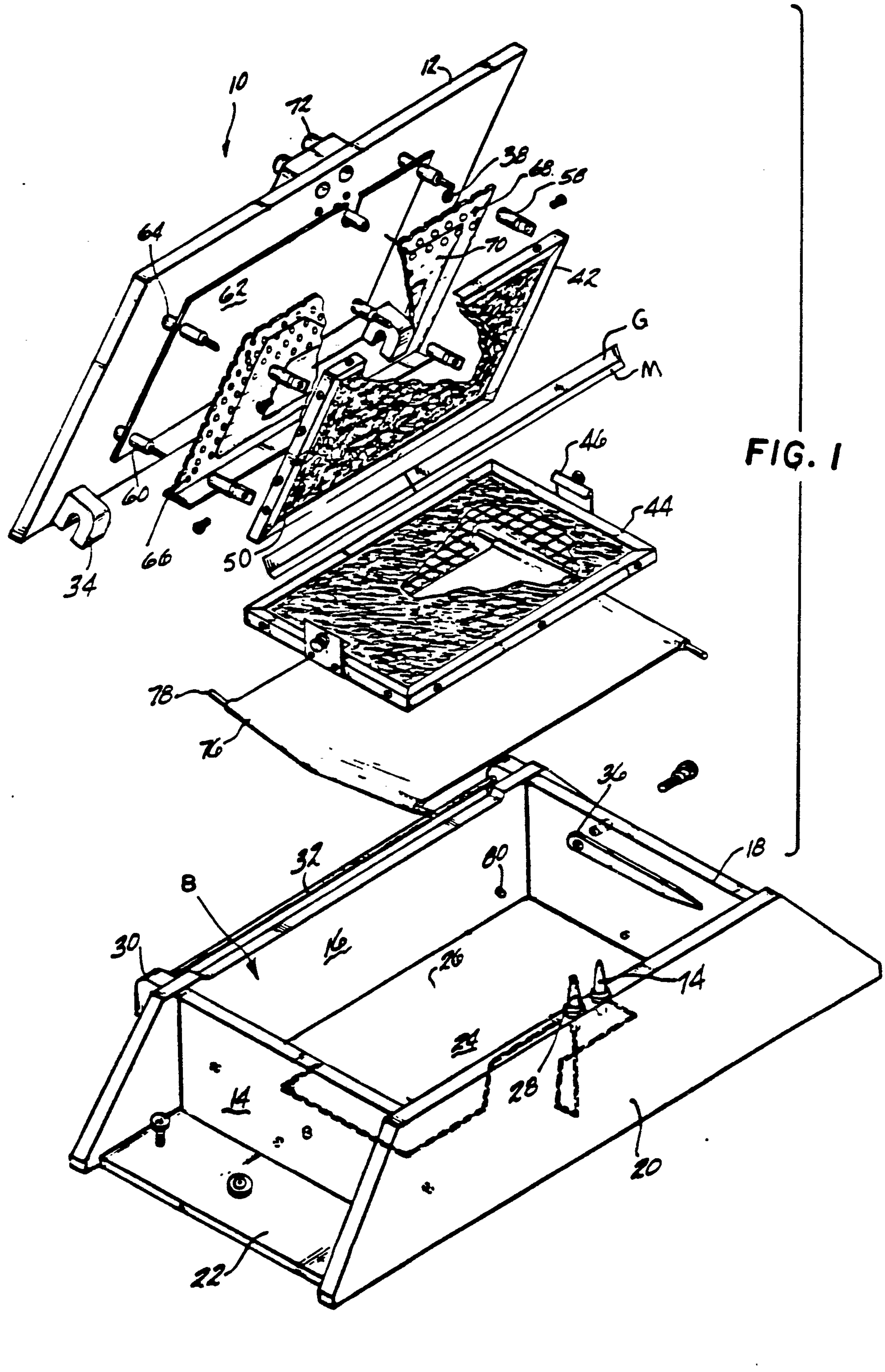
10
12
72
38
68
58
70
42
64
62
G
M
46
44
60
66
50
34
78
76
36
18
32
8
30
16
26
14
24
28
14
8
20
22

FIG. 1

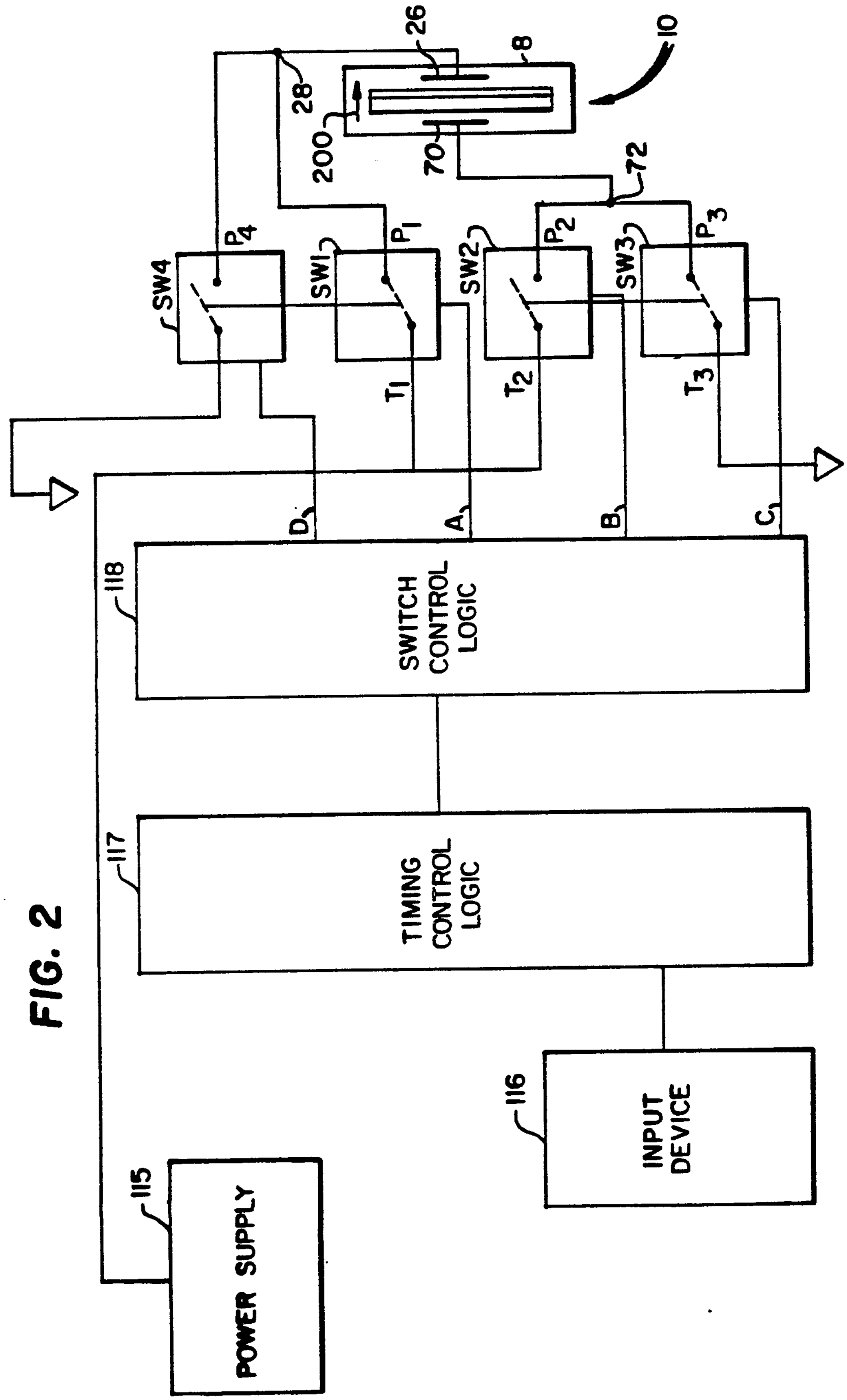
26
8
10
28
200
70
72
SW4
P4
SW1
P1
SW2
P2
SW3
P3
T1
T2
T3
D
A
B
C
118
SWITCH CONTROL LOGIC
117
TIMING CONTROL LOGIC
116
INPUT DEVICE
115
POWER SUPPLY

FIG. 2